# FASCICULE DE BREVET EUROPEEN

(11) **EP 1 843 518 B1**
(45) Date de publication et mention de la délivrance du brevet: **27.05.2020**
(21) Numéro de dépôt: 07290427.9
(22) Date de dépôt: 06.04.2007
(51) Int. Cl.: H04L 9/32, H04L 12/58

(54) **Procédé de protection d'adrresse de messagerie, système et dispostifs associes**
Verfahren zum Schutz von Instant-Messaging-Adressen, zugehöriges System und Vorrichtungen
E-mail address protection method, associated system and devices

(30) Priorité: 07.04.2006 FR 0603103
(43) Date de publication de la demande: 10.10.2007
(73) Titulaire: Orange, 75015 Paris (FR)
(72) Inventeur: Goutard, Cédric, 14440 Douvres la Delivrande (FR); Boutroux, Anne, 14880 Hermanville sur Mer (FR)
(74) Mandataire: Plasseraud IP

(56) Documents cités:
- EP-A2- 1 223 527
- WO-A-03/054764
- WO-A1-00/52900
- MENEZES, VANSTONE, OORSCHOT: "Handbook of Applied Cryptography" 1997, CRC PRESS LLC , USA , XP002423849 * page 548 - page 549 *

## Description

La présente invention concerne la protection des adresses de messagerie.

La mise à disposition d'une adresse de messagerie, par exemple sur un réseau de communication tel qu'internet, peut donner lieu à l'envoi de multiples messages non souhaités à cette adresse. Ce phénomène, qui a tendance à s'accroître, est connu sous les noms de '"pourriel", de "publipostage" ou encore de "spam".

Pour limiter les risques de réception de tels messages indésirables, un utilisateur peut avoir intérêt à ne pas fournir son adresse de messagerie au cours d'une communication avec un serveur de communication, par exemple lors d'un accès à un serveur Web.

Cependant, en dépit de ces précautions, on constate que de nombreux serveurs Web requièrent un enregistrement des utilisateurs à l'aide de leur adresse de messagerie, comme préalable à l'accès à leur contenu. Or, malgré les cadres légaux qui existent dans certains pays, les adresses fournies par les utilisateurs sont souvent exploitées sans leur consentement, à des fins commerciales notamment.

Le pourriel en résultant peut être filtré avec une efficacité relative, au prix de la mise en œuvre coûteuse et contraignante de moyens adéquats, telle que l'installation et l'utilisation d'un logiciel "antispam" par exemple.

Une autre possibilité pour éviter ce pourriel, consiste, pour un utilisateur, à communiquer une fausse adresse de messagerie lors de son enregistrement auprès d'un serveur. Cependant, cette technique comporte certains inconvénients. Il existe en effet un risque (faible) que la fausse adresse communiquée corresponde en fait à l'adresse d'un autre utilisateur, si bien que le pourriel sera alors dirigé vers cet autre utilisateur. Un autre inconvénient, plus gênant, est qu'aucune information utile ne pourra être recue par l'utilisateur ayant communiqué une fausse adresse de messagerie.

EP 1 223527 divulgue un mécanisme de distribution de courriers électroniques, faisant usage d'une adresse d'émission distincte de l'adresse de l'expéditeur. Ce mécanisme n'a cependant pas lieu dans le contexte d'une procédure d'enregistrement d'utilisateur auprès d'un serveur.

Des exemples et des modes de réalisation de l'art antérieur peuvent être trouvés dans le document WO 00/52900.

Un but de la présente invention est de pallier les inconvénients susmentionnés.

Un autre but de l'invention est de permettre à un utilisateur de recevoir des messages utiles depuis un serveur distant, tout en ayant la possibilité de contrôler le pourriel reçu par exemple à la suite d'un enregistrement auprès de ce serveur.

L'invention propose ainsi un procédé de protection d'une adresse de messagerie d'un utilisateur conforme à la revendication 1.

Le serveur dispose ainsi d'une adresse de substitution relative à l'utilisateur, à l'aide de laquelle il pourra échanger des messages avec l'utilisateur, sans pour autant connaître la véritable adresse de messagerie de l'utilisateur.

Du pourriel ne peut donc être transmis directement à destination de l'adresse de messagerie de l'utilisateur. Cette dernière est donc protégée du phénomène de pourriel.

La substitution d'adresse est par ailleurs réalisée de façon transparente pour l'utilisateur.

Si l'adresse de substitution est utilisée pour y transmettre du pourriel, l'utilisateur a avantageusement la possibilité d'invalider cette adresse, afin de faire cesser le phénomène de pourriel relativement à cette adresse.

De façon avantageuse, l'adresse de substitution tient compte d'éléments de contexte, telle qu'une adresse relative au serveur auquel ledit message est adressé. Cette adresse peut être celle du serveur lui-même, ou bien l'adresse d'une page gérée par ce serveur.

De façon avantageuse, l'adresse de substitution est mémorisée en correspondance avec l'adresse de messagerie de l'utilisateur, et éventuellement aussi avec des éléments de contexte.

Cette mémorisation permet ensuite de retrouver l'adresse de messagerie de l'utilisateur correspondant à l'adresse de substitution à destination de laquelle un message est adressé par exemple par le serveur. On peut ensuite transmettre ce message à l'utilisateur, à l'aide de l'adresse de messagerie retrouvée.

L'invention est définie dans les revendications indépendantes. Des réalisations particulières sont présentées dans les revendications dépendantes.

Certaines des réalisations décrites ci-après ne sont pas des réalisations de l'invention selon les revendications.

D'autres particularités et avantages de la présente invention apparaîtront dans la description ci-après d'exemples de réalisation non limitatifs, en référence aux dessins annexés, dans lesquels :
- la figure 1 est une représentation schématique des principales opérations mises en œuvre dans le cadre de l'invention ;
- la figure 2 est une représentation schématique d'opérations mises en œuvre au sein d'un système conforme à un exemple de réalisation de l'invention.

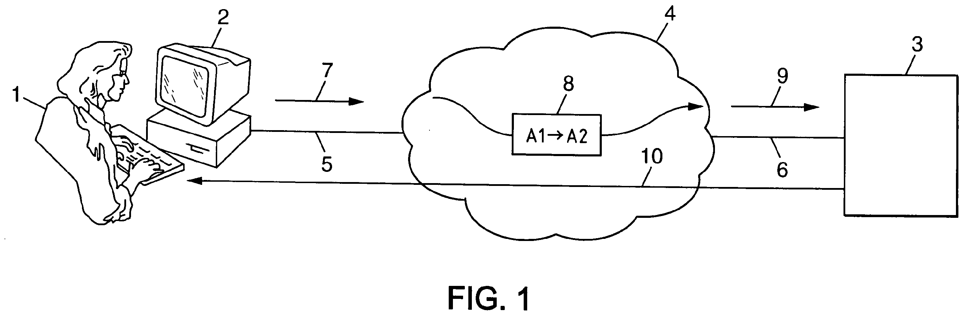

La figure 1 montre un utilisateur 1 utilisant un terminal 2, qui peut être par exemple un ordinateur, un téléphone portable, un assistant numérique personnel ou autre, doté de moyens pour échanger des messages avec une entité distante, avantageusement par l'intermédiaire d'un réseau de communication 4. L'utilisateur 1 est amené à communiquer des informations relatives à son adresse de messagerie, par exemple dans le cadre d'une procédure d'enregistrement auprès d'un serveur 3.

Le serveur 3 est par exemple un serveur Web. Dans ce cas, le terminal 2 de l'utilisateur 1 est en outre doté d'un navigateur Web apte à communiquer avec le serveur 3, par exemple par l'intermédiaire d'un réseau Internet 4. Les interfaces 5 et 6 entre le réseau 4 d'une part, et le terminal 2 et le serveur 3 d'autre part, peuvent être de tous types, par exemple filaires ou sans fil.

Selon l'invention, l'utilisateur 1 transmet un message 7 à l'attention du serveur 3. Ce message 7 contient une adresse de messagerie de l'utilisateur, à partir de laquelle il est capable de transmettre des messages à une entité distante et sur laquelle il est capable de recevoir des messages depuis une entité distante.

Ce message 7 est destiné au serveur 3 et il est transmis par l'intermédiaire du réseau 4, par exemple dans le cadre d'un enregistrement de l'utilisateur 1 auprès de ce serveur 3 ou bien d'une page Web gérée par ce serveur 3. Il peut être transmis sur requête du serveur 3. Il prend avantageusement la forme d'un formulaire rempli par l'utilisateur 1 avec son adresse de messagerie. Lorsque le serveur 3 est un serveur Web notamment, le message 7 comprend par exemple une requête de type HTTP (HyperText Transport Protocol).

Par la suite, le message 7 est intercepté par un dispositif ou un système qui prend place par exemple, au moins en partie, dans le réseau 4, bien que d'autres architectures soient également envisageables, certaines opérations pouvant être réalisées localement.

Le message 7 fait alors l'objet d'une analyse de son contenu, de façon à déterminer si celui-ci comporte une adresse de messagerie.

Dans l'affirmative, une adresse de substitution relative à l'utilisateur 1 est alors obtenue. Cette obtention peut consister en une création d'adresse. Elle peut aussi comprendre une recherche et une éventuelle identification d'une adresse de substitution déjà créée relativement à l'utilisateur 1 de préférence dans le même contexte, c'est-à-dire lors d'un précédent échange entre l'utilisateur 1 et le serveur 3 ou bien une page Web particulière gérée par le serveur 3.

L'adresse de substitution obtenue peut en effet avantageusement dépendre du serveur 3, ou bien de la page Web gérée par ce serveur 3, auquel le message 7 est adressé, c'est-à-dire d'éléments de contexte dans lequel la transmission du message 7 s'inscrit. De cette façon, un même utilisateur pourra se voir attribuer plusieurs adresses de substitution distinctes lors d'enregistrements respectifs auprès de serveurs (ou de pages Web) distincts. On instaure ainsi une correspondance entre l'adresse de substitution associée à l'utilisateur et le service visé par l'utilisateur.

En variante, on pourrait bien sûr envisager d'attribuer une même adresse de substitution à l'utilisateur 1 quel que soit le serveur ou la page Web auprès duquel l'utilisateur 1 souhaite s'enregistrer.

Une fois l'adresse de substitution obtenue, le message 7 est alors modifié de façon à ce que l'adresse de substitution remplace l'adresse de messagerie réelle de l'utilisateur. Cela est schématisé sur la figure 1 par l'étape 8, dans laquelle l'adresse de messagerie A1 de l'utilisateur 1 est remplacée par l'adresse de substitution A2 précédemment obtenue.

L'adresse de substitution A2 est en outre avantageusement mémorisée en correspondance avec l'adresse de messagerie A1, de façon à établir un lien entre l'adresse de substitution A2 et l'utilisateur 1, et être ainsi capable d'acheminer ultérieurement jusqu'à l'utilisateur 1 des messages comprenant l'adresse de substitution A2 comme adresse de destination. La mémorisation est en outre avantageusement faite aussi en correspondance avec des éléments de contexte, telle que l'adresse du serveur 3 ou de la page Web gérée par le serveur 3 auprès duquel l'utilisateur 1 souhaite s'enregistrer par exemple.

Le message ainsi modifié (message 9) est ensuite transmis au serveur 3. Un message de réponse (non représenté) peut être transmis en retour. Le serveur 3 dispose donc de la requête émise par l'utilisateur 1, mais dans laquelle seule l'adresse de substitution relative à cet utilisateur figure, en remplacement de son adresse de messagerie réelle. Ainsi, le serveur 3 n'a pas connaissance de la véritable adresse de messagerie de l'utilisateur 1. On comprend donc que cette adresse de messagerie de l'utilisateur 1 ne pourra pas être détournée pour y envoyer des messages indésirables, c'est-à-dire du pourriel.

Néanmoins, le serveur 3 peut transmettre un message 10 à l'attention de l'utilisateur 1, en utilisant son adresse de substitution. En effet, la mémorisation antérieure de l'adresse de substitution en correspondance avec l'adresse de messagerie de l'utilisateur 1 permet de retrouver cette adresse de messagerie et donc de transmettre à l'utilisateur 1, grâce à cette adresse retrouvée, le message 10 qui lui est destiné. Ainsi, bien que le serveur 3 ne connaisse pas l'adresse de messagerie de l'utilisateur 1, il peut lui transmettre un message 10 en utilisant son adresse de substitution.

On comprend ainsi qu'un canal de communication est ouvert pour permettre la transmission de messages du serveur 3 à l'utilisateur 1. Bien sûr, l'utilisateur 1 peut toujours transmettre des messages au serveur 3. Lorsque ces messages émis par l'utilisateur 1 contiennent l'adresse de messagerie de cet utilisateur comme adresse d'origine, celle-ci est avantageusement remplacée par l'adresse de substitution prédéterminée avant réception desdits message au serveur 3, de façon à ce que ce dernier identifie l'origine du message transmis, sans pour autant disposer de l'adresse de messagerie réelle de l'utilisateur 1.

Des messages peuvent donc être échangés entre l'utilisateur 1 et le serveur 3, sans que l'adresse de messagerie de l'utilisateur 1 soit divulguée. En outre, cette protection de l'adresse de messagerie de l'utilisateur 1 est réalisée de façon transparente pour cet utilisateur, puisque le remplacement de l'adresse de messagerie A1 en une adresse de substitution A2 est réalisé en aval du terminal 2 utilisé par l'utilisateur 1. Ainsi, l'utilisateur 1 n'a pas besoin de connaître l'adresse de substitution utilisée relativement au serveur 3 (ou à la page Web considérée). Il n'a pas non plus besoin de mettre en œuvre un mécanisme lourd pour créer lui-même une adresse temporaire.

De façon avantageuse, l'utilisateur 1 est informé du remplacement de son adresse de messagerie par une adresse de substitution. En option, l'utilisateur 1 pourrait même s'opposer à ce remplacement, s'il souhaite que son adresse de messagerie réelle soit communiquée au serveur 3.

Il se peut que du pourriel soit reçu par l'utilisateur 3 si l'adresse de substitution est utilisée de façon abusive par le serveur 3 lui-même ou bien par des tiers ayant eu accès à cette information à partir du serveur 3. L'utilisateur 1 a alors la possibilité d'invalider l'adresse de substitution, de façon qu'aucun message utilisant cette adresse de substitution ne soit plus transmis à l'utilisateur 1. On interrompt ainsi le phénomène de pourriel provenant de l'adresse de substitution. Bien sûr, l'utilisateur 1 ne sera alors plus en mesure de recevoir des messages de la part du serveur 3. Mais cela peut être surmonté par un nouvel enregistrement auprès de ce serveur, qui se traduira éventuellement par la création d'une nouvelle adresse de substitution.

L'invalidation de l'adresse de substitution mentionnée ci-dessus peut prendre plusieurs formes. Elle comprend avantageusement une désactivation de l'opération consistant à retrouver l'adresse de messagerie de l'utilisateur 1 mémorisée en correspondance avec l'adresse de substitution, lorsqu'un message 10 est transmis avec l'adresse de substitution comme adresse de destination. Cette désactivation peut résulter par exemple de la suppression de la correspondance mémorisée entre l'adresse de substitution et l'adresse de messagerie de l'utilisateur, voire de la suppression de toute mention de l'adresse de substitution dans la mémoire du système.

Dans ce qui précède, les opérations mises en œuvre dans le cadre de l'invention ont été décrites de façon générale, sans se préoccuper des entités responsables de cette mise en œuvre.

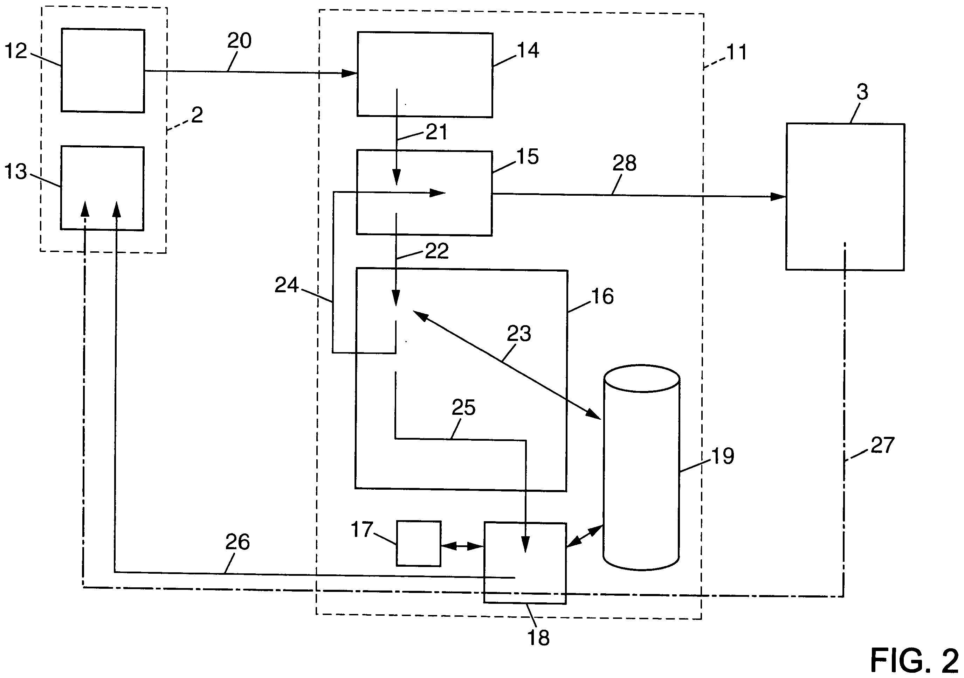

La figure 2 représente, quant à elle, un exemple d'implémentation de cette invention. Ce mode de réalisation n'est cependant pas limitatif et d'autres distributions des rôles sont bien sûr envisageables pour la mise en œuvre de l'invention.

Sur la figure 2, on retrouve le terminal 2 de l'utilisateur 1 d'une part et le serveur Web 3 d'autre part. Le terminal 2 comprend un navigateur Web 12 apte à échanger des requêtes HTTP avec le serveur 3. Il comprend aussi un client de messagerie 13 qui coopère avec un serveur de messagerie 18 pour permettre l'émission et la réception de messages selon une technologie de messagerie électronique classique.

Un système 11 a en outre été représenté sur la figure 2 entre le terminal 2 et le serveur 3. Ce système 11 comprend plusieurs dispositifs qui seront décrits ci-après.

Certains au moins de ces dispositifs peuvent faire partie d'un réseau de communication, tel qu'un réseau Internet, par l'intermédiaire duquel le terminal 2 et le serveur 3 peuvent communiquer.

L'utilisateur 1 transmet, à partir de son navigateur 12, une requête HTTP 20 à destination du serveur Web 3. Cette requête 20 contient une adresse de messagerie de l'utilisateur 1. Elle peut être transmise par exemple sur demande du serveur Web 3. Cette demande peut être faite dans le cadre d'un enregistrement de l'utilisateur 1 auprès du serveur Web 3 ou d'une page Web gérée par ce serveur 3. La requête 20 peut notamment être transmise lors du remplissage, par l'utilisateur 1, d'un formulaire fourni par le serveur 3.

Dans l'architecture illustrée sur la figure 2, la requête HTTP 20 émise par le navigateur 12 est tout d'abord interceptée par un routeur ou "switch" 14. A l'étape 21, le routeur 14 redirige la requête HTTP vers un serveur cache, encore appelé proxy-cache, c'est-à-dire un serveur mandataire capable de stocker et de mettre à jour régulièrement des pages Web précédemment consultées, de façon à réduire le temps d'accès à ces pages lors d'une nouvelle demande de consultation.

Le proxy-cache 15 analyse alors la requête HTTP reçue. Il détermine en particulier si cette requête HTTP est du type POST, tel que cela est défini dans la spécification technique RFC 2616 qui décrit le protocole HTTP 1.1 et qui a été publiée en juin 1999 par l'IETF (Internet Engineering Task Force). En effet, une requête POST est susceptible de contenir, dans son corps, des informations fournies dans un formulaire, telle que l'adresse de messagerie de l'utilisateur 1.

Si la requête reçue par le proxy-cache 15 est du type POST, le proxy-cache peut alors la transmettre, lors d'une étape 22, à un serveur 16 chargé de réaliser certains traitements qui seront détaillés ci-après. En variante, le proxy-cache 15 pourrait lui-même réaliser ces différents traitements.

De façon avantageuse, le serveur 16 utilise le protocole iCAP (Internet Content Adaptation Protocol) tel que décrit notamment dans la spécification technique RFC 3507 publiée en avril 2003 par l'IETF. Dans ce cas, la requête POST est encapsulée par le proxy-cache 15 dans un flux iCAP à destination du serveur iCAP 16. D'autres protocoles pourraient bien sûr être utilisés en variante.

Le serveur iCAP 16 détecte la présence d'une adresse de messagerie dans le corps de la requête reçue. Il peut alors éventuellement vérifier dans une base de données 19, si une adresse de substitution a déjà été attribuée relativement à l'adresse de messagerie détectée. En effet, la base de données 19 mémorise une correspondance entre chaque adresse de messagerie et une adresse de substitution correspondante qui a été préalablement déterminée.

De préférence, la base de données 19 stocke en outre une information relative au serveur Web, voire à la page Web, qui a donné lieu à la création de ladite adresse de substitution. Ainsi, la base de données 19 stocke des triplets tels que (adresse de messagerie, adresse de substitution, URL), où l'URL (Uniform Resource Locator) désigne l'adresse de la page Web auprès de laquelle l'utilisateur 1 s'est enregistré précédemment. Dans ce dernier cas, le serveur iCAP 16 permet alors de vérifier si une adresse de substitution a déjà été attribuée pour l'utilisateur 1 dans le même contexte, c'est-à-dire relativement à la même URL (étape 23).

Si le serveur iCAP 16 détermine qu'une adresse de substitution a déjà été attribuée à l'utilisateur 1 préférentiellement dans le même contexte, il extrait alors cette adresse de substitution de la base de données 19.

Dans le cas contraire où aucune adresse de substitution n'a déjà été associée à l'utilisateur 1 préférentiellement dans le même contexte, le serveur iCAP 16 génère alors une adresse de substitution pour cet utilisateur 1. Cette adresse de substitution est alors transmise à la base de données 19 pour y être mémorisée en correspondance avec l'adresse de messagerie de l'utilisateur 1, telle qu'elle a été transmise dans la requête 20, et de préférence en correspondance aussi avec l'URL de la page Web gérée par le serveur Web 3, auprès de laquelle l'utilisateur 1 effectue un enregistrement (étape 23).

Une fois l'adresse de substitution obtenue au niveau du serveur iCAP 16, soit par extraction d'une adresse déjà disponible dans la base de données 19, soit par création d'une nouvelle adresse, le serveur iCAP 16 remplace alors, dans le corps de la requête HTTP transmise depuis le navigateur Web 12, l'adresse de messagerie de l'utilisateur 1 par cette adresse de substitution. La requête ainsi modifiée est alors retournée par le serveur iCAP 16 vers le proxy-cache 15 (étape 24), pour pouvoir être acheminée jusqu'au serveur Web 3 (transmission 28).

En outre, le serveur iCAP 16 informe le serveur de messagerie 18 avec lequel le client de messagerie 13 de l'utilisateur 1 coopère, de la détermination de l'adresse de substitution pour l'utilisateur 1. Le serveur de messagerie 18 est alors en mesure d'établir un lien entre l'adresse de messagerie réelle de l'utilisateur 1 et ladite adresse de substitution.

Ce lien ou "alias" peut être maintenu à l'aide d'un pointeur visant un champ approprié de la base de données 19. En alternative, ce lien peut être maintenu au sein du serveur de messagerie 18 lui-même. Dans ce dernier cas, le serveur de messagerie 18 mémorise alors la correspondance entre l'adresse de messagerie de l'utilisateur 1 et l'adresse de substitution qui lui a été communiquée par le serveur iCAP 16 (étape 25).

On notera que le serveur de messagerie 18 peut être géré à différents niveaux selon les besoins. Il peut par exemple s'agir d'un serveur d'une entreprise auquel l'utilisateur 1 appartient, d'un fournisseur d'accès à Internet auprès duquel l'utilisateur 1 est abonné, etc.

De façon avantageuse, le serveur de messagerie 18 peut ensuite transmettre un message au client de messagerie 13 (étape 26) de l'utilisateur 1 pour l'informer du fait que la substitution d'adresse a été réalisée. Ce message peut en outre contenir des informations sur la façon dont l'utilisateur 1 peut invalider l'adresse de substitution qui lui a été attribuée.

De façon classique, le serveur Web 3 peut alors répondre à la requête HTTP 20 émise par l'utilisateur 1, à l'aide d'un message de réponse HTTP (non représenté) reçu par le proxy-cache 15 avant d'être acheminé vers le navigateur Web 12.

On notera que les étapes 23 à 25 peuvent être soumises, chacune ou dans leur ensemble, à une acceptation de la part de l'utilisateur 1 (demande de confirmation), de manière que ce dernier puisse choisir de communiquer au serveur 3 son adresse de messagerie réelle plutôt qu'une adresse de substitution.

A l'issue des opérations décrites ci-dessus, le serveur Web 3 a donc reçu une requête 28 provenant de l'utilisateur 1, mais contenant une adresse de substitution en remplacement de l'adresse de messagerie réelle de l'utilisateur 1. Le serveur Web 3 n'a donc pas connaissance de l'adresse de messagerie réelle de l'utilisateur 1 et il ne peut donc pas l'utiliser ou la fournir à des tiers pour transmettre à l'utilisateur 1 des messages indésirables, c'est-à-dire du pourriel.

Par ailleurs, un canal de communication est alors ouvert entre le serveur Web 3 et le client de messagerie 13 par l'intermédiaire du serveur de messagerie 18. Ce canal de communication descendant est noté 27 sur la figure 2 et est représenté à l'aide d'une flèche en trait mixte interrompu. Pour communiquer selon ce canal 27, le serveur Web 3 transmet un message à l'attention de l'utilisateur 1 en utilisant son adresse de substitution. Ce message est reçu au serveur de messagerie 18 qui l'analyse et retrouve l'adresse de messagerie de l'utilisateur 1 correspondant à l'adresse de substitution indiquée par le serveur 3. Le serveur de messagerie 18 peut alors acheminer le message vers le client de messagerie 13 de l'utilisateur 1 à l'aide de l'adresse de messagerie ainsi retrouvée. De ce fait, le serveur Web 3 peut transmettre normalement des messages à l'utilisateur 1, sans pour autant connaître son adresse de messagerie réelle.

Le canal de communication 27 peut également être utilisé dans le sens montant pour transmettre des messages du client de messagerie 13 au serveur Web 3, par l'intermédiaire du serveur de messagerie 18.

Un mécanisme d'invalidation de l'adresse de substitution est par ailleurs possible à l'initiative de l'utilisateur 1, notamment pour le cas où le serveur 3 utiliserait ou fournirait l'adresse de substitution relative à l'utilisateur 1 pour y transmettre du pourriel.

L'invalidation de l'adresse de substitution peut par exemple comprendre une requête du client de messagerie 13 à l'attention du serveur de messagerie 18, pour que ce dernier supprime le lien, c'est-à-dire l'alias, établi entre l'adresse de messagerie de l'utilisateur 1 et l'adresse de substitution correspondante.

Si le serveur de messagerie 18 connaît ce lien par interrogation de la base de données 19, l'invalidation de l'adresse de substitution peut comprendre la rupture du lien entre l'adresse de messagerie de l'utilisateur 1 et ladite adresse de substitution au niveau de cette base de données 19, par exemple en supprimant le triplet (adresse de messagerie, adresse de substitution, URL) correspondant.

La requête d'invalidation peut être adressée directement au serveur de messagerie 18 par le client de messagerie 13. En variante, cette requête peut être adressée à un serveur Web 17 qui se charge de requérir l'invalidation auprès du serveur de messagerie 18. Avantageusement, l'utilisateur du client de messagerie 13 connaît l'adresse du serveur Web 17 après qu'un pointeur vers ce serveur 17 lui a été fourni avec le message 26 mentionné plus haut. L'utilisateur 1, bien que n'ayant pas accès à l'adresse de substitution qui lui a été associé, connaît donc la façon de l'invalider.

Lorsque l'adresse de substitution a été invalidée, le serveur de messagerie 18 n'est plus capable de retrouver l'adresse de messagerie réelle de l'utilisateur 1 sur réception d'un message destiné à l'adresse de substitution et provenant par exemple du serveur 3 ou d'un tiers. De ce fait, le message reçu au serveur de messagerie 18 ne peut être acheminé jusqu'au client de messagerie 13 de l'utilisateur 1. L'utilisateur 1 évite ainsi de recevoir du pourriel lié à son enregistrement auprès du serveur Web 3. On peut ainsi mettre un terme au phénomène de pourriel provenant d'une source connue, c'est-à-dire par l'intermédiaire d'une adresse de substitution préalablement établie.

On notera en outre que l'adresse de messagerie réelle de l'utilisateur 1 n'étant pas communiquée au serveur Web 3, elle est donc préservée du phénomène de pourriel. Elle peut, de plus, continuer à être utilisée normalement pour recevoir des messages de la part de tout tiers ayant eu légitimement accès à cette adresse.

On rappelle que les opérations décrites ci-dessus en référence à la figure 2 pourraient être réalisées par un même dispositif ou bien à l'aide de dispositifs distincts d'un système avec une répartition éventuellement différente de celle présentée plus haut. En particulier, certaines au moins de ces opérations pourraient être réalisées localement, au niveau du terminal 2 par exemple.

Dans un mode de réalisation particulier de l'invention, certaines au moins des opérations décrites plus haut, par exemple celles réalisées par le serveur iCAP 16 de la figure 2, pourraient être effectuées à l'aide d'un programme d'ordinateur chargé et exécuté par des moyens informatiques d'un serveur par exemple.

De même, certaines au moins des opérations décrites plus haut en référence au serveur de messagerie 18, notamment celles consistant à retrouver l'adresse de messagerie de l'utilisateur sur réception d'un message destiné à l'adresse de substitution et à transmettre le message reçu à l'utilisateur sur la base de l'adresse de messagerie retrouvée, pourraient être effectuées à l'aide d'un programme d'ordinateur chargé et exécuté par des moyens informatiques d'un serveur par exemple.

## Revendications

1. Procédé de protection d'une adresse de messagerie d'un utilisateur comprenant les étapes suivantes :
- intercepter un message (7:20) adressé par l'utilisateur à un serveur (3), ledit message contenant l'adresse de messagerie de l'utilisateur et étant transmis dans le cadre d'une procédure d'enregistrement de l'utilisateur auprès du serveur ;
- obtenir une adresse de substitution relative à l'utilisateur ; et
- transmettre le message (9:28) intercepté au serveur après y avoir remplacé l'adresse de messagerie de l'utilisateur par ladite adresse de substitution.

2. Procédé selon la revendication 1, comprenant en outre une mémorisation de ladite adresse de substitution en correspondance avec l'adresse de messagerie de l'utilisateur.

3. Procédé selon la revendication 2, comprenant en outre les étapes suivantes, lorsqu'un message à destination de ladite adresse de substitution a été émis :
- retrouver l'adresse de messagerie de l'utilisateur (1) mémorisée en correspondance avec ladite adresse de substitution ;
- transmettre à l'utilisateur le message à destination de ladite adresse de substitution, à l'aide de l'adresse de messagerie retrouvée.

4. Procédé selon la revendication 3, dans lequel, sur demande de l'utilisateur (1), l'étape consistant à retrouver l'adresse de messagerie de l'utilisateur mémorisée en correspondance avec ladite adresse de substitution est rendue inopérante.

5. Système adapté à la mise en œuvre du procédé de protection d'une adresse de messagerie d'un utilisateur (1) selon l'une quelconque des revendications 1 à 4, comprenant :
- des moyens pour intercepter un message (7,20) adressé par l'utilisateur à un serveur (3), ledit message contenant l'adresse de messagerie de l'utilisateur et étant transmis dans le cadre d'une procédure d'enregistrement de l'utilisateur auprès du serveur ;
- des moyens pour obtenir une adresse de substitution relative à l'utilisateur ; et
- des moyens pour transmettre le message (9:28) intercepté au serveur après y avoir remplacé l'adresse de messagerie de l'utilisateur par ladite adresse de substitution.

6. Serveur intermédiaire (16) adapté à la mise en œuvre du procédé de protection d'une adresse de messagerie d'un utilisateur (1) selon l'une quelconque des revendications 1 à 4, comprenant :
- des moyens pour intercepter un message (20) adressé par l'utilisateur à un serveur (3), ledit message contenant l'adresse de messagerie de l'utilisateur et étant transmis dans le cadre d'une procédure d'enregistrement de l'utilisateur auprès du serveur ;
- des moyens pour obtenir une adresse de substitution relative à l'utilisateur ;
- des moyens pour remplacer, dans le message reçu, l'adresse de messagerie de l'utilisateur par ladite adresse de substitution ; et
- des moyens pour délivrer le message intercepté, à l'issue dudit remplacement, en vue de sa transmission au serveur.

7. Produit programme d'ordinateur comprenant des instructions de code pour mettre en œuvre les étapes suivantes, lorsqu'il est chargé et exécuté par des moyens informatiques d'un serveur intermédiaire (16) :
- intercepter un message adressé par un utilisateur (1) à un serveur (3), ledit message contenant l'adresse de messagerie de l'utilisateur et étant transmis dans le cadre d'une procédure d'enregistrement de l'utilisateur auprès du serveur ;
- obtenir une adresse de substitution relative à l'utilisateur ;
- remplacer, dans le message reçu, l'adresse de messagerie de l'utilisateur par ladite adresse de substitution ; et
- délivrer le message intercepté, à l'issue dudit remplacement, en vue de sa transmission au serveur (3).

## Patentansprüche

1. Verfahren zum Schutz einer Messaging-Adresse eines Nutzers, das die folgenden Schritte umfasst:
- Abfangen einer Nachricht (7, 20), die von dem Nutzer an einen Server (3) adressiert wird, wobei die Nachricht die Messaging-Adresse des Nutzers enthält und im Rahmen eines Verfahrens zur Registrierung des Nutzers bei dem Server übermittelt wird;
- Erhalten einer Ersatzadresse bezüglich des Nutzers; und
- Übermitteln der abgefangenen Nachricht (9, 28) an den Server, nachdem in ihr die Messaging-Adresse des Nutzers durch die Ersatzadresse ersetzt wurde.

2. Verfahren nach Anspruch 1, umfassend ferner eine Speicherung der Ersatzadresse als Entsprechung zur Messaging-Adresse des Nutzers.

3. Verfahren nach Anspruch 2, das ferner die folgenden Schritte umfasst, wenn eine an die Ersatzadresse gerichtete Nachricht gesendet worden ist:
- Wiederfinden der Messaging-Adresse des Nutzers (1), die als Entsprechung zur Ersatzadresse gespeichert wurde;
- Übermitteln der an die Ersatzadresse gerichteten Nachricht an den Nutzer mithilfe der wiedergefundenen Messaging-Adresse.

4. Verfahren nach Anspruch 3, bei dem auf Anforderung des Nutzers der Schritt (1), der darin besteht, die als Entsprechung zur Ersatzadresse gespeicherte Messaging-Adresse des Nutzers wiederzufinden, deaktiviert wird.

5. System, das zur Umsetzung des Verfahrens zum Schutz einer Messaging-Adresse eines Nutzers (1) nach einem der Ansprüche 1 bis 4 eingerichtet ist, umfassend:
- Einrichtungen zum Abfangen einer Nachricht (7, 20), die von dem Nutzer an einen Server (3) adressiert wird, wobei die Nachricht die Messaging-Adresse des Nutzers enthält und im Rahmen eines Verfahrens zur Registrierung des Nutzers bei dem Server übermittelt wird;
- Einrichtungen zum Erhalten einer Ersatzadresse bezüglich des Nutzers; und
- Einrichtungen zum Übermitteln der abgefangenen Nachricht (9, 28) an den Server, nachdem in ihr die Messaging-Adresse des Nutzers durch die Ersatzadresse ersetzt wurde.

6. Zwischenserver (16), der zur Umsetzung des Verfahrens zum Schutz einer Messaging-Adresse eines Nutzers (1) nach einem der Ansprüche 1 bis 4 eingerichtet ist, umfassend:
- Einrichtungen zum Abfangen einer Nachricht (20), die von dem Nutzer an einen Server (3) adressiert wird, wobei die Nachricht die Messaging-Adresse des Nutzers enthält und im Rahmen eines Verfahrens zur Registrierung des Nutzers bei dem Server übermittelt wird;
- Einrichtungen zum Erhalten einer Ersatzadresse bezüglich des Nutzers;
- Einrichtungen zum Ersetzen der Messaging-Adresse des Nutzers in der empfangenen Nachricht durch die Ersatzadresse; und
- Einrichtungen zum Ausgeben der abgefangenen Nachricht nach dem Ersetzen mit Blick auf ihre Übermittlung an den Server.

7. Computerprogrammprodukt, das Codeanweisungen umfasst, die bei seiner Ausführung durch Datenverarbeitungseinrichtungen eines Zwischenservers (16) die folgenden Schritte ausführen:
- Abfangen einer Nachricht, die von einem Nutzer (1) an einen Server (3) adressiert wird, wobei die Nachricht die Messaging-Adresse des Nutzers enthält und im Rahmen eines Verfahrens zur Registrierung des Nutzers bei dem Server übermittelt wird;
- Erhalten einer Ersatzadresse bezüglich des Nutzers;
- Ersetzen der Messaging-Adresse des Nutzers in der empfangenen Nachricht durch die Ersatzadresse; und
- Ausgeben der abgefangenen Nachricht nach dem Ersetzen mit Blick auf ihre Übermittlung an den Server(3).

## Claims

1. Method for protecting an email address of a user, comprising the following steps:
- intercepting a message (7:20) sent by the user to a server (3), said message containing the email address of the user and being transmitted in the context of a procedure for registering the user with the server;
- obtaining a substitute address for the user; and
- transmitting the intercepted message (9:28) to the server after having replaced, in said message, the email address of the user with said substitute address.

2. Method according to Claim 1, further comprising an operation of storing said substitute address in association with the email address of the user.

3. Method according to Claim 2, further comprising the following steps once a message bound for said substitute address has been dispatched:
- retrieving the email address of the user (1) that is stored in association with said substitute address;
- transmitting the message bound for said substitute address to the user by means of the retrieved email address.

4. Method according to Claim 3, wherein, at the request of the user (1), the step consisting in retrieving the email address of the user that is stored in association with said substitute address is cancelled.

5. System suitable for implementing the method for protecting an email address of a user (1) according to any one of Claims 1 to 4, comprising:
- means for intercepting a message (7,20) sent by the user to a server (3), said message containing the email address of the user and being transmitted in the context of a procedure for registering the user with the server;
- means for obtaining a substitute address for the user; and
- means for transmitting the intercepted message (9:28) to the server after having replaced, in said message, the email address of the user with said substitute address.

6. Intermediate server (16) suitable for implementing the method for protecting an email address of a user (1) according to any one of Claims 1 to 4, comprising:
- means for intercepting a message (20) sent by the user to a server (3), said message containing the email address of the user and being transmitted in the context of a procedure for registering the user with the server;
- means for obtaining a substitute address for the user;
- means for replacing, in the received message, the email address of the user with said substitute address; and
- means for delivering the intercepted message, on completion of said replacement, for transmission thereof to the server.

7. Computer program product comprising code instructions for implementing the following steps, when said computer program product is loaded and executed by computing means of an intermediate server (16):
- intercepting a message sent by a user (1) to a server (3), said message containing the email address of the user and being transmitted in the context of a procedure for registering the user with the server;
- obtaining a substitute address for the user;
- replacing, in the received message, the email address of the user with said substitute address; and
- delivering the intercepted message, on completion of said replacement, for transmission thereof to the server (3).
